# EUROPEAN PATENT SPECIFICATION

(11) **EP 3 495 630 B1**
(45) Date of publication and mention of the grant of the patent: **09.09.2020**
(21) Application number: 18202913.2
(22) Date of filing: 26.10.2018
(51) Int. Cl.: F01D 25/20, F02C 7/27, F02C 7/277, F02C 7/32

(54) **PNEUMATIC STARTER SUPPLEMENTAL LUBRICATION SYSTEM**
ZUSATZSCHMIERSYSTEM FÜR PNEUMATISCHE STARTER
SYSTÈME DE LUBRIFICATION SUPPLÉMENTAIRE DE DÉMARREUR PNEUMATIQUE

(30) Priority: 26.10.2017 US 201715794152
(43) Date of publication of application: 12.06.2019
(73) Proprietor: Hamilton Sundstrand Corporation, Charlotte, NC 28217-4578 (US)
(72) Inventor: PECH, John T., Canton, CT Connecticut 06019 (US); HARDER, Benjamin T., DeKalb, IL Illinois 60115 (US)
(74) Representative: Dehns

(56) References cited:
- EP-A2- 1 298 298
- EP-A2- 2 362 072
- US-B1- 9 664 070

## Description

### BACKGROUND

The embodiments herein generally relate to gas turbine engines and more specifically to a pneumatic starter supplemental lubrication system for a gas turbine engine.

Aircraft gas turbine engines are being designed with tighter internal clearances between engine cases and blades of the compressor and turbine to increase efficiency and reduce fuel burn. These tighter clearances can result in compressor blade tips and turbine blade tips rubbing on the engine cases if the engine core bows as it cools down between flights and an engine start is attempted.

After engine shutdown, the main shafts, compressor disks, turbine disks and other parts with large thermal mass cool at different rates. The heat rises to the top of the engine allowing the lower portions of these parts to become cooler than the upper portions. This causes blade tip clearance between the engine case and blades of the compressor and turbine to decrease as the engine shafts and cases bow temporarily due to uneven thermal conditions. This does not present a problem for the engine unless an engine start is attempted while the bowed condition exists. To address this condition, engine manufacturers have found that motoring the engine at relatively low speed for a period of time prior to engine start allows the parts to achieve uniform thermal conditions and eliminate the bowed condition, restoring blade tip to engine case clearances.

Pneumatic or air turbine starters are typically duty cycle limited due to lubrication issues and heat dissipation. Lubrication systems for starters are typically designed for higher speed operation during an engine starting event, for example, where an engine oil pump pressurizes a shared oil system for starter lubrication and lubrication of other engine components. Extended lower speed motoring of a starter can potentially result in damage due to insufficient lubrication within the starter.

EP 2 362 072 A2 relates to the cooling of pneumatic turbine starter lubricant, wherein starter lubricant pools in a lubricant sump inside the turbine starter. A gear assembly picks up an amount of lubricant while passing through said lubricant sump. When the turbine starter is not in operation, a clutch decouples the starter from the engine gearbox assembly such that also the gear assembly does not continue to rotate. In this case, a splash guard continues to rotate, thus, distributing starter lubricant. Alternatively a pump may be provided. Thus, the lubricant is pumped through a heat exchanger providing for an improved cooling of the lubricant. US 9,664,070 B1 is related to a bowed rotor prevention system allowing rotation of the turbomachinery at very low speed. By slow and/or periodic rotation, sharp thermal gradients are prevented eliminating bow condition. EP1 298 298 A2 is related to a turbine start and lubrication system.

### BRIEF DESCRIPTION

According to one embodiment of the present invention, a starter supplemental lubrication system for a gas turbine engine with the features of claim 1 is provided. The starter supplemental lubrication system includes a pneumatic starter operable to drive rotation of a rotor shaft of a gas turbine engine through an accessory gearbox. The pneumatic starter is configured to receive a primary lubricant flow at a first rotational speed range and receive a supplemental lubricant flow at a second rotational speed range that is less than the first rotational speed range. The starter supplemental lubrication system also includes a supplemental lubricant pump operable to supply the supplemental lubricant flow at the second rotational speed range.

The primary lubricant flow is received from an engine lubrication system and the second rotational speed range provides insufficient lubrication from the engine lubrication system to the pneumatic starter.

In addition to one or more of the features described above or below, further embodiments may include a clutch connected to a drive input of the supplemental lubricant pump and operable to selectively disengage rotation of the drive input above the second rotational speed range.

In addition to one or more of the features described above or below, further embodiments may include a diverter valve operable to divert the supplemental lubricant flow from the pneumatic starter.

In addition to one or more of the features described above or below, embodiments may include where the primary lubricant flow is driven by a pump coupled to the accessory gearbox.

In addition to one or more of the features described above or below, further embodiments may include where the supplemental lubricant pump is driven by an electric motor.

In addition to one or more of the features described above or below, further embodiments may include where the supplemental lubricant pump is driven by a starter gear train in the pneumatic starter.

In addition to one or more of the features described above or below, further embodiments may include where the supplemental lubricant pump is internal to the pneumatic starter.

In addition to one or more of the features described above or below, further embodiments may include where the supplemental lubricant pump is external to the pneumatic starter.

In addition to one or more of the features described above or below, further embodiments may include where the primary lubricant flow is driven by a self-contained splash lubrication system within the pneumatic starter.

According to another embodiment of the present invention, a method of lubrication in an engine starting system for a gas turbine engine with the features of claim 10 is provided, wherein the method includes providing a primary lubricant flow to a pneumatic starter operable to drive rotation of a rotor shaft of a gas turbine engine through an accessory gearbox at a first rotational speed range. A supplemental lubricant pump provides a supplemental lubricant flow to the pneumatic starter at a second rotational speed range that is less than the first rotational speed range. The primary lubricant flow is received from an engine lubrication system and the second rotational speed range provides insufficient lubrication form the engine lubrication system to the pneumatic starter.

Technical effects of embodiments of the present invention include providing supplemental lubrication to a pneumatic starter operably connected to an aircraft main engine for reduced speed lubrication.

The foregoing features and elements may be combined in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike:
FIG. 1 is a schematic illustration of an aircraft engine starting system according to an embodiment of the invention;
FIG. 2 is a schematic illustration of a starter supplemental lubrication system according to an embodiment of the invention;
FIG. 3 is another schematic illustration of a starter supplemental lubrication system according to an embodiment of the invention;
FIG. 4 is an illustration of an internal lubrication system of a starter according to an embodiment of the invention;
FIG. 5 is a further schematic illustration of a starter supplemental lubrication system according to an embodiment of the invention; and
FIG. 6 is a flow diagram illustrating a method according to an embodiment of the present invention.

### DETAILED DESCRIPTION

A detailed description of one or more embodiments of the disclosed apparatus and method are presented herein by way of exemplification and not limitation with reference to the Figures.

Various embodiments of the present invention are related to providing lubrication during a bowed rotor start condition or a break-in operation of a gas turbine engine. Embodiments can include using a pneumatic starter to control a rotor speed of a gas turbine engine to mitigate a bowed rotor condition using a cool-down motoring process. Cool-down motoring may be performed by running an engine starting system at a lower speed with a longer duration than typically used for engine starting using a pneumatic starter to maintain a rotor speed and/or profile. Cool-down motoring (engine bowed rotor motoring) can be performed by the pneumatic starter, which may rotate components of the gas turbine engine continuously between about 0-3000 RPM (engine core speed revolutions per minute). A supplemental starter lubrication system provides lubrication to rotating components of the pneumatic starter at the lower speeds of cool-down motoring, while primary lubrication during engine start operations can provide lubrication at higher speeds, e.g., above 3000 RPM. The supplemental starter lubrication system can also provide supplemental lubrication for new/overhauled engine break-in conditioning which can be performed during engine test.

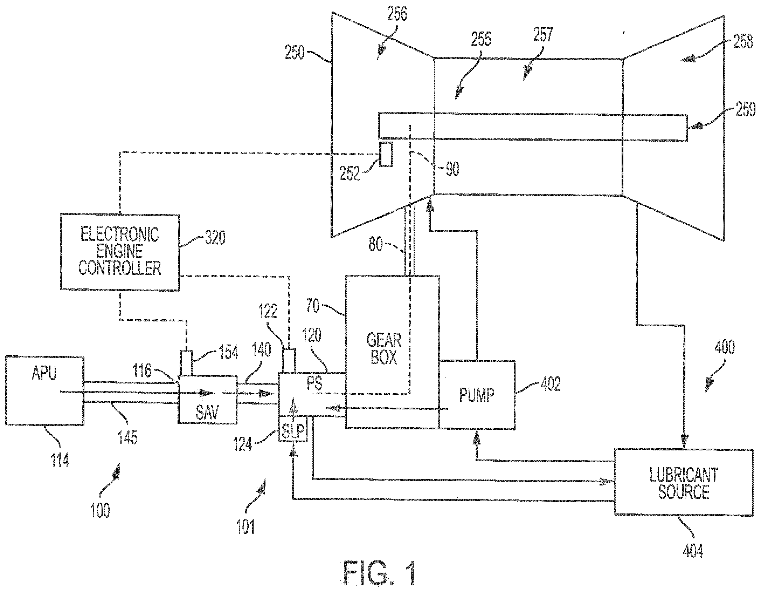

Referring now to the figures, FIG. 1 shows a block diagram of a gas turbine engine 250 and an associated engine starting system 100 with a starter supplemental lubrication system 101 according to an embodiment of the present disclosure. The engine starting system 100 includes a starter air valve (SAV) 116 operably connected in fluid communication with a pneumatic starter (PS) 120 through at least one duct 140. The SAV 116 is operable to receive a compressed air flow from a compressed air source through one or more ducts 145. In the illustrated embodiment, the compressed air source is an auxiliary power unit (APU) 114. The compressed air source may also be a ground cart or a cross-engine bleed.

The pneumatic starter 120 of the engine starting system 100 is operably connected to the gas turbine engine 250 through an accessory gearbox 70 and drive shaft 80 (e.g., a tower shaft), as shown in FIG. 1. As depicted in the example of FIG. 1, the pneumatic starter 120 is connected to the gas turbine engine 250 by a drive line 90, which runs from an output of the pneumatic starter 120 to the accessory gearbox 70 through the drive shaft 80 to a rotor shaft 259 of the gas turbine engine 250. Operable connections may include gear mesh connections. The pneumatic starter 120 is configured to initiate a startup process of the gas turbine engine 250, driving rotation of the rotor shaft 259 of a starting spool 255 of the gas turbine engine 250. The rotor shaft 259 operably connects an engine compressor 256 to an engine turbine 258. Thus, once the engine compressor 256 starts spinning, air is pulled into combustion chamber 257 and mixes with fuel for combustion. Once the air and fuel mixture combusts in the combustion chamber 257, a resulting compressed gas flow drives rotation of the engine turbine 258, which rotates the engine turbine 258 and subsequently the engine compressor 256. Once the startup process has been completed, the pneumatic starter 120 can be disengaged from the gas turbine engine 250 to prevent over-speed conditions when the gas turbine engine 250 operates at its normal higher speeds. Although only a single instance of an engine compressor-turbine pair of starting spool 255 is depicted in the example of FIG. 1, it will be understood that embodiments can include any number of spools, such as high/mid/low pressure engine compressor-turbine pairs within the gas turbine engine 250.

The pneumatic starter 120 is further operable to drive rotation of the rotor shaft 259 at a lower speed for a longer duration than typically used for engine starting in a motoring mode of operation (also referred to as cool-down motoring) to prevent/reduce a bowed rotor condition. If a bowed rotor condition has developed, for instance, due to a hot engine shutdown and without taking further immediate action, cool-down motoring may be performed by the pneumatic starter 120 to reduce a bowed rotor condition by driving rotation of the rotor shaft 259. The gas turbine engine 250 can also be motored continuously after shutdown using the pneumatic starter 120 to prevent the bowed rotor condition from occurring as the gas turbine engine 250 cools.

An electronic engine controller 320, such as a full authority digital engine control (FADEC), typically controls the engine starting system 100, the gas turbine engine 250, and controls performance parameters of the gas turbine engine 250 such as, for example, engine temperature, engine speed, and fuel flow. The electronic engine controller 320 may include at least one processor and at least one associated memory comprising computer-executable instructions that, when executed by the processor, cause the processor to perform various operations. The processor may be, but is not limited to, a single-processor or multi-processor system of any of a wide array of possible architectures, including microcontroller, field programmable gate array (FPGA), central processing unit (CPU), application specific integrated circuit (ASIC), digital signal processor (DSP), and/or graphics processing unit (GPU) hardware arranged homogenously or heterogeneously. The memory may be a storage device such as, for example, a random access memory (RAM), read only memory (ROM), nonvolatile memory, or other electronic, optical, magnetic, or any other computer readable medium.

The electronic engine controller 320 can control valve operation, for instance, modulation of the starter air valve 116 to control a motoring speed of the gas turbine engine 250 during cool-down motoring. The starter air valve 116 delivers air through a duct 140 to the pneumatic starter 120. During regular operation, the starter air valve 116 may be opened and closed using a solenoid 154. The solenoid 154 may be modulated to control a motoring speed of the gas turbine engine 250 during cool-down motoring. The solenoid 154 may be in electrical communication with the electronic engine controller 320. The electronic engine controller 320 can monitor motoring and other speed-related conditions using, for example, a starter speed sensor 122 and/or an engine speed sensor 252. In some embodiments, speeds can be derived from other components, such as an alternator/generator (not depicted) frequency indicative of a rotational speed driven through the accessory gearbox 70.

An engine lubrication system 400 provides a lubricant, such as oil, to various components of the gas turbine engine 250. A pump 402 urges a lubricant from a lubricant source 404 to provide lubrication to a plurality of components of the gas turbine engine 250. Although a single instance of the pump 402 is depicted in FIG. 1, there can be multiple instances of the pump 402 in the engine lubrication system 400, such as a main oil pump, a lube and scavenge pump, and the like. The pump 402 can be driven by the accessory gearbox 70 to circulate lubricant to the gas turbine engine 250 and other subsystems, such as the pneumatic starter 120. At lower speeds of the rotor shaft 259, such as less than 3000 RPM, the pressure generated by the pump 402 may not be adequate to meet the lubrication needs of the pneumatic starter 120. In embodiments, a supplemental lubricant pump 124 is provided as part of the starter supplemental lubrication system 101. The supplemental lubricant pump 124 is operable at lower speeds than that pump 402, such as at less than 3000 RPM, to provide lubricant to the pneumatic starter 120. In some embodiments, the supplemental lubricant pump 124 circulates a lubricant from the lubricant source 404, such as a main oil tank, shared with the pump 402. Alternatively, the supplemental lubricant pump 124 may use oil stored in a housing assembly of the pneumatic starter 120. The supplemental lubricant pump 124 may be internal to the pneumatic starter 120 or mounted on the side of the pneumatic starter 120 and in both cases, may be driven by the pneumatic starter 120 or may be electrically driven. In other embodiments, the lubricant source 404 is distributed between separate isolated tanks or sumps.

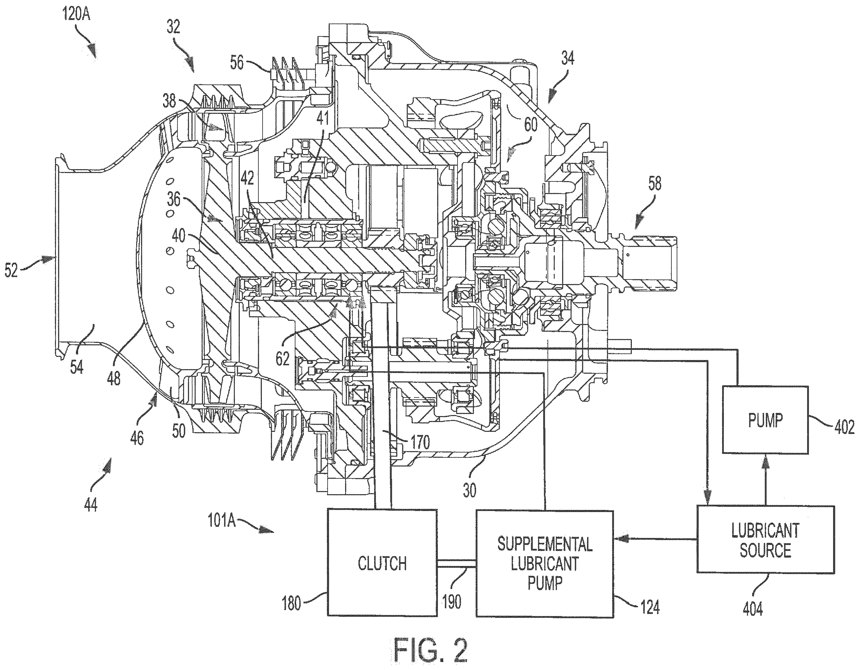

Referring now to FIGS. 2-5, various example configurations of the starter supplemental lubrication system 101 are depicted according to embodiments as starter supplemental lubrication system 101A, 101B, and 101C. A non-limiting example of the pneumatic starter 120 that may be used to initiate the rotation of a gas turbine engine 250 (see FIG. 1), such as a turbofan engine through an accessory gearbox 70 is depicted in further detail. As mentioned above, the pneumatic starter 120 may provide both normal starting capability and reduced speed motoring of the gas turbine engine 250. Various examples of the pneumatic starter 120 are depicted as pneumatic starter 120A, 120B, 120C in FIGS. 2, 3, and 5, and generally include a housing assembly 30 that includes at least a turbine section 32 and an output section 34. The turbine section 32 includes a turbine wheel 36 with a plurality of turbine blades 38, a hub 40, and a turbine rotor shaft 42. The turbine blades 38 of the turbine wheel 36 are located downstream of an inlet housing assembly 44 which includes an inlet housing 46 which contains a nozzle 48. The nozzle 48 includes a plurality of stator vanes 50 which direct compressed air flow from an inlet 52 through an inlet flow path 54. The compressed air flows past the vanes 50 drives the turbine wheel 36 then is exhausted through an outlet 56.

The turbine wheel 36 is driven by the compressed airflow such that the turbine rotor shaft 42 may mechanically drive a starter output shaft 58 though a starter gear train 60, such as a planetary gear system. The pneumatic starter 120 thereby transmits relatively high loads through the starter gear train 60 to convert the pneumatic energy from compressed air into mechanical energy to, for example, rotate the rotor shaft 259 (FIG. 1) for starting the gas turbine engine 250 (FIG. 1). The turbine blades 38 of the turbine wheel 36 and the vanes 50 of the nozzle 48-both of which are defined herein as airfoils-may be defined with computational fluid dynamics (CFD) analytical software and are optimized to meet the specific performance requirements of a specific pneumatic starter.

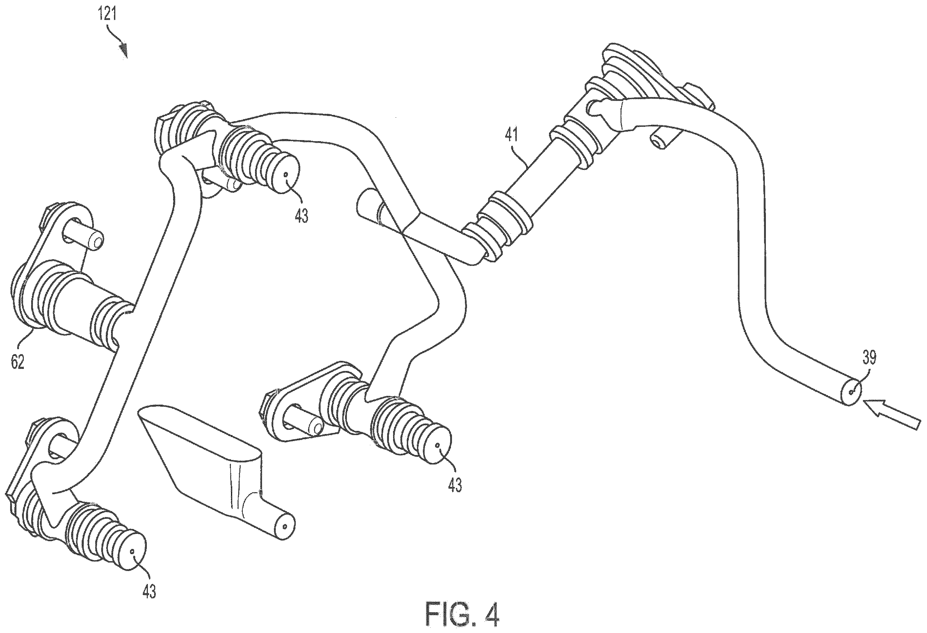

In the example of FIG. 2, the supplemental lubricant pump 124 is driven by rotation of the turbine wheel 36 through a mechanical connection 170 and a clutch 180. The clutch 180 can be connected to a drive input 190 of the supplemental lubricant pump 124 and operable to selectively disengage rotation of the drive input 190 above a rotational speed range. For instance, the clutch 180 can be a centrifugal clutch operable to disengage at higher speeds where the pump 402 provides sufficient lubricant pressure in a primary lubricant flow such that a supplemental lubricant flow from the supplemental lubricant pump 124 is not needed. In the example of FIG. 2, the pump 402 urges a primary lubricant flow to components of the pneumatic starter 120, such as pneumatic starter turbine bearings 62, at a first rotational speed range of the rotor shaft 259 of the gas turbine engine 250 of FIG. 1. The supplemental lubricant pump 124 supplies a supplemental lubricant flow to components of the pneumatic starter 120, such as pneumatic starter turbine bearings 62, at a second rotational speed range of the rotor shaft 259 of the gas turbine engine 250 of FIG. 1. The second rotational speed range is less than the first rotational speed range, such as a second rotational speed range of up to 3000 RPM and first rotational speed range above 3000 RPM. In some instances, the second rotational speed range can go down to 0 RPM, where the supplemental lubricant pump 124 is enabled prior to rotation of the rotor shaft 259. The second rotational speed range can be defined as a speed range that provides insufficient lubrication from the engine lubrication system 400 to the pneumatic starter 120 (e.g., below a minimum oil pressure at one or more elements of the pneumatic starter 120). In some embodiments, operation of the pump 402 and the supplemental lubricant pump 124 can overlap. For instance, the pump 402 may produce a lubricant flow at the second (lower) rotational speed range; however, such a lubricant flow may not be sufficient to adequately lubricate the pneumatic starter turbine bearings 62 or other components of the pneumatic starter 120. Further, the supplemental lubricant pump 124 may continue to supply the supplemental lubricant flow above the second rotational speed range for a period of time after the second rotational speed range is exceeded. Lubricant flow can be transferred through a transfer tube 41 within the pneumatic starter 120A, 120B as best seen in an internal lubrication system 121 of FIG. 4 that routes a lubricant flow from a lube inlet 39 to a plurality of cluster gearshaft bearings 43 and pneumatic starter turbine bearings 62.

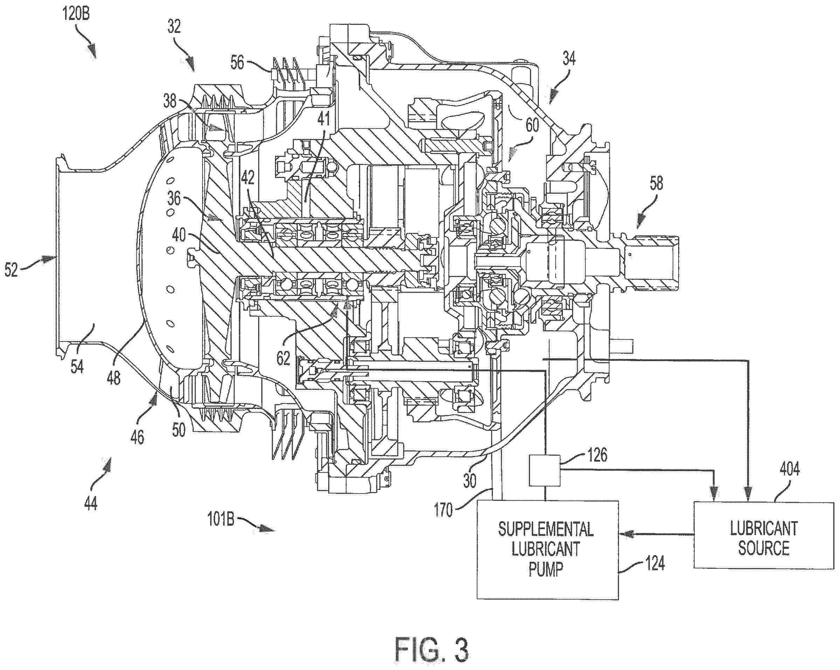

A simplified schematic of an alternate configuration of the starter supplemental lubrication system 101 is depicted as starter supplemental lubrication system 101B in FIG. 3. Rather than using the clutch 180 of FIG. 2, in FIG. 3 the supplemental lubricant pump 124 is driven by the starter gear train 60, and the supplemental lubricant flow produced by the supplemental lubricant pump 124 is selectively diverted by a diverter valve 126 back to the lubricant source 404. For example, the electronic engine controller 320 (FIG. 1) can control the diverter valve 126 to divert the supplemental lubricant flow from the pneumatic starter 120 when the rotor shaft 259 is above the second rotational speed range.

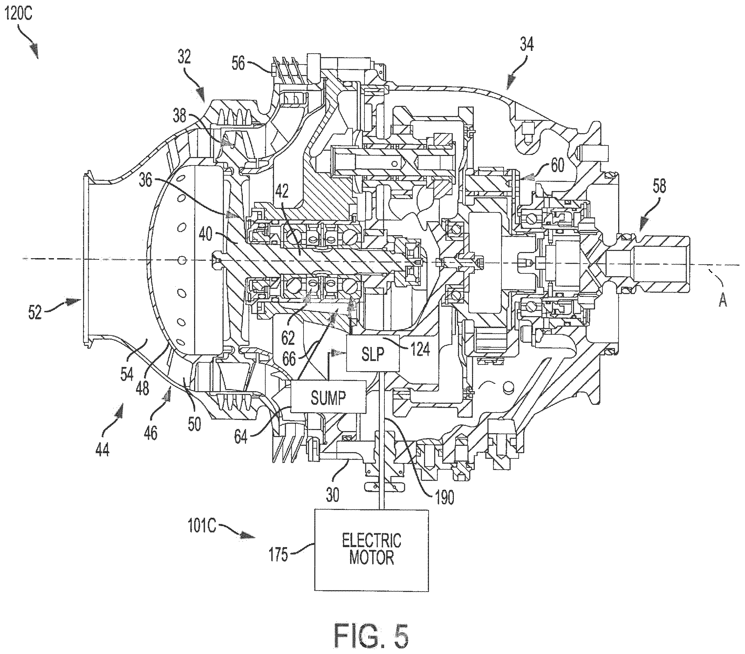

In the examples of FIGS. 1-3, the supplemental lubricant pump 124 is depicted as being mechanically driven and external to the pneumatic starter 120. Alternatively, the supplemental lubricant pump 124 can be internal to the pneumatic starter 120 and/or electrically driven. Further, the primary lubricant flow can originate from within the pneumatic starter 120, such as a self-contained splash lubrication system. A splash lubrication system may not be effective at lower operating speeds depending on design parameters. The example of FIG. 5 depicts an alternate configuration of the starter supplemental lubrication system 101 as a starter supplemental lubrication system 101C including an electric motor 175 operable to rotate the drive input 190 of the supplemental lubricant pump 124. The electric motor 175 can be controlled, for example, by the electronic engine controller 320 of FIG. 1 or by another controller (not depicted). In the example of FIG. 5, the supplemental lubricant pump 124 is internal to the pneumatic starter 120C. A sump 64 within the pneumatic starter 120C provides an internal lubricant source that is different from the lubricant source 404 of FIGS. 1-3. The sump 64 serves as a primary lubricant source for a self-contained splash lubrication system 66 that provides a primary lubricant flow to the pneumatic starter turbine bearings 62 under normal starting conditions. The supplemental lubricant pump 124 can draw lubricant from the sump 64 to establish a supplemental lubricant flow during lower speed motoring operation where the self-contained splash lubrication system 66 may be less effective in adequately lubricating the pneumatic starter turbine bearings 62 and/or other components of the pneumatic starter 120. It will be understood that other combinations of the elements of FIGS. 1-5 can be added, removed, shifted, combined, and/or subdivided in embodiments.

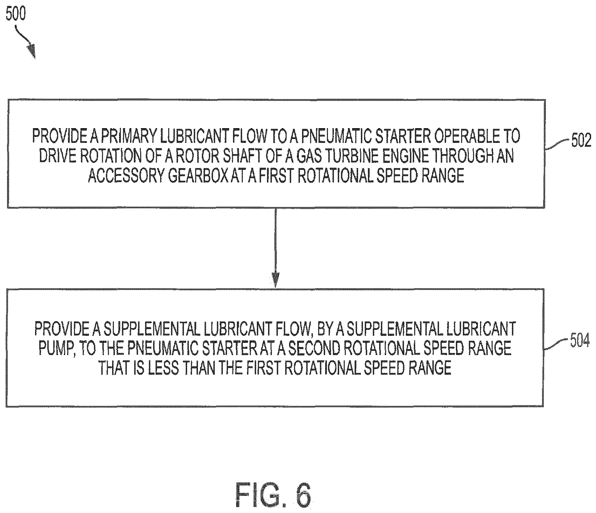

Turning now to FIG. 6 while continuing to reference FIG. 1-5, FIG. 6 shows a flow diagram illustrating a method 500 of cooling a gas turbine engine 250, according to an embodiment of the present disclosure. At block 502, a primary lubricant flow is provided to a pneumatic starter 120 operable to drive rotation of a rotor shaft 259 of a gas turbine engine 250 through an accessory gearbox 70 at a first rotational speed range. The first rotational speed range can be, for example, speeds at or above 3000 RPM of the rotor shaft 259.

At block 504, a supplemental lubricant flow is provided, by a supplemental lubricant pump 124, to the pneumatic starter 120 at a second rotational speed range that is less than the first rotational speed range. The second rotational speed range can be, for example, speeds below 3000 RPM of the rotor shaft 259.

In embodiments, the primary lubricant flow can be received from the engine lubrication system 400, and the second rotational speed range may provide insufficient lubrication from the engine lubrication system 400 to the pneumatic starter 120. In embodiment that include a clutch, such as the clutch 180 of FIG. 2, the method 500 may also include selectively disengaging rotation of a drive input 190 of the supplemental lubricant pump 124 above the second rotational speed range. In embodiments that include a diverter valve, such as the diverter valve 126 of FIG. 3, the method 500 may also include diverting the supplemental lubricant flow from the pneumatic starter 120 above the second rotational speed range. In some embodiments, the supplemental lubricant pump 124 is driven by an electric motor, such as the electric motor 175 of FIG. 5. In some embodiments, the supplemental lubricant pump 124 is driven by a starter gear train in the pneumatic starter 120, such as the starter gear train 60 of FIGS. 2 and 3. In some embodiments, the primary lubricant flow is driven by a pump 402 coupled to the accessory gearbox 70, such as a main oil pump and/or a lubricant and scavenge pump. In some embodiments, the primary lubricant flow is driven by a self-contained splash lubrication system 66 within the pneumatic starter 120.

While the above description has described the flow process of FIG. 6 in a particular order, it should be appreciated that unless otherwise specifically required in the attached claims that the ordering of the steps may be varied.

While the present disclosure has been described with reference to an exemplary embodiment or embodiments, it will be understood by those skilled in the art that various changes may be made and equivalents may be substituted for elements thereof without departing from the scope of the present invention as defined by the claims. In addition, many modifications may be made to adapt a particular situation or material to the teachings of the present disclosure without departing from the scope of the invention. Therefore, it is intended that the present disclosure not be limited to the particular embodiment disclosed as the best mode contemplated for carrying out this present disclosure, but that the present disclosure will include all embodiments falling within the scope of the claims.

## Claims

1. A starter supplemental lubrication system (101) for a gas turbine engine, the starter supplemental lubrication system comprising:
a pneumatic starter (120) operable to drive rotation of a rotor shaft (259) of a gas turbine engine (250) through an accessory gearbox (70), the pneumatic starter configured to receive a primary lubricant flow at a first rotational speed range and receive a supplemental lubricant flow at a second rotational speed range that is less than the first rotational speed range; wherein the primary lubricant flow is received from an engine lubrication system (400) and the second rotational speed range provides insufficient lubrication from the engine lubrication system (400) to the pneumatic starter (120), the starter supplemental lubrication system (101) being **characterised in that** it comprises
a supplemental lubricant pump (124) operable to supply the supplemental lubricant flow at the second rotational speed range.

2. The starter supplemental lubrication system of claim 1, further comprising:
a clutch (180) connected to a drive input (190) of the supplemental lubricant pump (124) and operable to selectively disengage rotation of the drive input above the second rotational speed range.

3. The starter supplemental lubrication system of claim 1 or 2, further comprising:
a diverter valve (126) operable to divert the supplemental lubricant flow from the pneumatic starter.

4. The starter supplemental lubrication system of claim 1, wherein the primary lubricant flow is driven by a pump (402) coupled to the accessory gearbox.

5. The starter supplemental lubrication system of any preceding claim, wherein the supplemental lubricant pump (124) is driven by an electric motor (175).

6. The starter supplemental lubrication system of any of claims 1 to 4, wherein the supplemental lubricant pump is driven by a starter gear train in the pneumatic starter.

7. The starter supplemental lubrication system of any preceding claim, wherein the supplemental lubricant pump is internal to the pneumatic starter.

8. The starter supplemental lubrication system of any of claims 1 to 6, wherein the supplemental lubricant pump is external to the pneumatic starter.

9. The starter supplemental lubrication system of claim 1, wherein the primary lubricant flow is driven by a self-contained splash lubrication system within the pneumatic starter.

10. A method of lubrication in an engine starting system for a gas turbine engine, the method comprising:
providing a primary lubricant flow to a pneumatic starter operable to drive rotation of a rotor shaft of a gas turbine engine through an accessory gearbox at a first rotational speed range; and
providing a supplemental lubricant flow, by a supplemental lubricant pump, to the pneumatic starter at a second rotational speed range that is less than the first rotational speed range; wherein the primary lubricant flow is received from an engine lubrication system and the second rotational speed range provides insufficient lubrication from the engine lubrication system to the pneumatic starter.

11. The method of claim 10, further comprising:
selectively disengaging rotation of a drive input of the supplemental lubricant pump above the second rotational speed range.

12. The method of claim 10, further comprising:
diverting the supplemental lubricant flow from the pneumatic starter above the second rotational speed range.

13. The method of claim 10, further comprising:
driving the primary lubricant flow by a pump coupled to the accessory gearbox.

## Patentansprüche

1. Starterzusatzschmiersystem (101) für ein Gasturbinentriebwerk, wobei das Starterzusatzschmiersystem Folgendes umfasst:
einen pneumatischen Starter (120), der betriebsfähig ist, um die Drehung einer Rotorwelle (259) eines Gasturbinentriebwerks (250) durch ein Hilfsgetriebe (70) anzutreiben, wobei der pneumatische Starter konfiguriert ist, um einen primären Schmiermittelstrom mit einem ersten Drehzahlbereich aufzunehmen und einen zusätzlichen Schmiermittelstrom mit einem zweiten Drehzahlbereich aufzunehmen, der kleiner als der erste Drehzahlbereich ist; wobei der primäre Schmiermittelstrom von einem Triebwerksschmiersystem (400) aufgenommen wird und der zweite Drehzahlbereich eine unzureichende Schmierung von dem Triebwerksschmiersystem (400) für den pneumatischen Starter (120) bereitstellt, wobei das Starterzusatzschmiersystem (101) **dadurch gekennzeichnet ist, dass** es Folgendes umfasst:
eine Zusatzschmiermittelpumpe (124), die betriebsfähig ist, um den zusätzlichen Schmiermittelstrom mit dem zweiten Drehzahlbereich zuzuführen.

2. Starterzusatzschmiersystem nach Anspruch 1, ferner umfassend:
eine Kupplung (180), die mit einem Antriebseingang (190) der Zusatzschmiermittelpumpe (124) verbunden und betriebsfähig ist, um selektiv eine Drehung des Antriebseingangs oberhalb des zweiten Drehzahlbereichs zu entkoppeln.

3. Starterzusatzschmiersystem nach Anspruch 1 oder 2, ferner umfassend:
ein Umleitventil (126), das betriebsfähig ist, um den zusätzlichen Schmiermittelstrom von dem pneumatischen Starter umzuleiten.

4. Starterzusatzschmiersystem nach Anspruch 1, wobei der primäre Schmiermittelstrom von einer Pumpe (402) angetrieben wird, die an das Hilfsgetriebe gekoppelt ist.

5. Starterzusatzschmiersystem nach einem der vorhergehenden Ansprüche, wobei die Zusatzschmiermittelpumpe (124) von einem Elektromotor (175) angetrieben wird.

6. Starterzusatzschmiersystem nach einem der Ansprüche 1 bis 4, wobei die Zusatzschmiermittelpumpe von einem Startergetriebe in dem pneumatischen Starter angetrieben wird.

7. Starterzusatzschmiersystem nach einem der vorhergehenden Ansprüche, wobei sich die Zusatzschmiermittelpumpe innerhalb des pneumatischen Starters befindet.

8. Starterzusatzschmiersystem nach einem der Ansprüche 1 bis 6, wobei sich die Zusatzschmiermittelpumpe außerhalb des pneumatischen Starters befindet.

9. Starterzusatzschmiersystem nach Anspruch 1, wobei der primäre Schmiermittelstrom von einem unabhängigen Spritzschmiersystem in dem pneumatischen Starter angetrieben wird.

10. Verfahren zur Schmierung in einem Triebwerksstartsystem für ein Gasturbinentriebwerk, wobei das Verfahren Folgendes umfasst:
Bereitstellen eines primären Schmiermittelstroms zu einem pneumatischen Starter, der betriebsfähig ist, um die Drehung einer Rotorwelle eines Gasturbinentriebwerks durch ein Hilfsgetriebe mit einem ersten Drehzahlbereich anzutreiben; und
Bereitstellen eines zusätzlichen Schmiermittelstroms durch eine Zusatzschmiermittelpumpe für den pneumatischen Starter mit einem zweiten Drehzahlbereich, der kleiner als der erste Drehzahlbereich ist; wobei der primäre Schmiermittelstrom von einem Triebwerksschmiersystem aufgenommen wird und der zweite Drehzahlbereich eine unzureichende Schmierung von dem Triebwerksschmiersystem für den pneumatischen Starter bereitstellt.

11. Verfahren nach Anspruch 10, ferner umfassend:
selektives Entkoppeln einer Drehung eines Antriebseingangs der Zusatzschmiermittelpumpe oberhalb des zweiten Drehzahlbereichs.

12. Verfahren nach Anspruch 10, ferner umfassend:
Umleiten des zusätzlichen Schmiermittelstroms von dem pneumatischen Starter oberhalb des zweiten Drehzahlbereichs.

13. Verfahren nach Anspruch 10, ferner umfassend:
Antreiben des primären Schmiermittelstroms durch eine Pumpe, die an das Hilfsgetriebe gekoppelt ist.

## Revendications

1. Système de lubrification supplémentaire de démarreur (101) pour un moteur à turbine à gaz, le système de lubrification supplémentaire de démarreur comprenant :
un démarreur pneumatique (120) pouvant fonctionner de manière à entraîner la rotation d'un arbre de rotor (259) d'un moteur à turbine à gaz (250) au moyen d'une boîte de vitesses accessoire (70), le démarreur pneumatique étant conçu pour recevoir un flux de lubrifiant primaire dans une première plage de vitesse de rotation et recevoir un flux de lubrifiant supplémentaire dans une seconde plage de vitesse de rotation qui est inférieure à la première plage de vitesse de rotation ; dans lequel le flux de lubrifiant primaire est reçu depuis un système de lubrification de moteur (400) et la seconde plage de vitesse de rotation fournit une lubrification insuffisante du système de lubrification de moteur (400) au démarreur pneumatique (120), le système de lubrification supplémentaire de démarreur (101) étant **caractérisé en ce qu'**il comprend une pompe à lubrifiant supplémentaire (124) pouvant fonctionner de manière à fournir le flux de lubrifiant supplémentaire dans la seconde plage de vitesse de rotation.

2. Système de lubrification supplémentaire de démarreur selon la revendication 1, comprenant en outre :
un embrayage (180) relié à une entrée d'entraînement (190) de la pompe à lubrifiant supplémentaire (124) et pouvant fonctionner de manière à désengager sélectivement la rotation de l'entrée d'entraînement au-dessus de la seconde plage de vitesse de rotation.

3. Système de lubrification supplémentaire de démarreur selon la revendication 1 ou 2, comprenant en outre :
une vanne de dérivation (126) pouvant fonctionner de manière à dériver le flux de lubrifiant supplémentaire du démarreur pneumatique.

4. Système de lubrification supplémentaire de démarreur selon la revendication 1, dans lequel le flux de lubrifiant primaire est entraîné par une pompe (402) couplée à la boîte de vitesses accessoire.

5. Système de lubrification supplémentaire de démarreur selon une quelconque revendication précédente, dans lequel la pompe à lubrifiant supplémentaire (124) est entraînée par un moteur électrique (175).

6. Système de lubrification supplémentaire de démarreur selon l'une quelconque des revendications 1 à 4, dans lequel la pompe à lubrifiant supplémentaire est entraînée par un train d'engrenages de démarrage dans le démarreur pneumatique.

7. Système de lubrification supplémentaire de démarreur selon une quelconque revendication précédente, dans lequel la pompe à lubrifiant supplémentaire est interne au démarreur pneumatique.

8. Système de lubrification supplémentaire de démarreur selon l'une quelconque des revendications 1 à 6, dans lequel la pompe à lubrifiant supplémentaire est externe au démarreur pneumatique.

9. Système de lubrification supplémentaire de démarreur selon la revendication 1, dans lequel le flux de lubrifiant primaire est entraîné par un système de lubrification par éclaboussures autonome à l'intérieur du démarreur pneumatique.

10. Procédé de lubrification dans un système de démarrage de moteur pour un moteur à turbine à gaz, le procédé comprenant :
la fourniture d'un flux de lubrifiant primaire à un démarreur pneumatique pouvant fonctionner de manière à entraîner la rotation d'un arbre de rotor d'un moteur à turbine à gaz au moyen d'une boîte de vitesses accessoire dans une première plage de vitesse de rotation ; et
la fourniture d'un flux de lubrifiant supplémentaire, par une pompe à lubrifiant supplémentaire, au démarreur pneumatique dans une seconde plage de vitesse de rotation qui est inférieure à la première plage de vitesse de rotation ; dans lequel le flux de lubrifiant primaire est reçu depuis un système de lubrification de moteur et la seconde plage de vitesse de rotation fournit une lubrification insuffisante du système de lubrification de moteur au démarreur pneumatique.

11. Procédé selon la revendication 10, comprenant en outre :
le désengagement sélectif de la rotation d'une entrée d'entraînement de la pompe à lubrifiant supplémentaire au-dessus de la seconde plage de vitesse de rotation.

12. Procédé selon la revendication 10, comprenant en outre :
la dérivation du débit de lubrifiant supplémentaire du démarreur pneumatique au-dessus de la seconde plage de vitesse de rotation.

13. Procédé selon la revendication 10, comprenant en outre :
l'entraînement du flux de lubrifiant primaire par une pompe couplée à la boîte de vitesses accessoire.
